# EUROPÄISCHE PATENTSCHRIFT

(11) **EP 1 013 159 B1**
(45) Veröffentlichungstag und Bekanntmachung des Hinweises auf die Patenterteilung: **15.09.2010**
(21) Anmeldenummer: 99124990.5
(22) Anmeldetag: 15.12.1999
(51) Int. Cl.: A01B 73/04

(54) **Steuerung für landwirtschaftliche Arbeitsmaschine**
Agricultural working machine control
Contrôle pour machine de travail agricole

(30) Priorität: 23.12.1998 DE 19859875
(43) Veröffentlichungstag der Anmeldung: 28.06.2000
(60) Teilanmeldung: 06010235.7
(73) Patentinhaber: CLAAS Saulgau GmbH, 88340 Bad Saulgau (DE)
(72) Erfinder: Berkemann, Stephan, 33100 Paderborn (DE); Betz, Peter, 88471 Baustetten (DE); Kleine, Herbert, 46284 Dorsten (DE); Frick, Clemens, 88356 Ostrach (DE)

(56) Entgegenhaltungen:
- EP-A- 0 494 516
- EP-A- 0 788 730
- DE-C- 3 900 724
- GB-A- 2 149 734

## Beschreibung

Die Erfindung betrifft einen Kreiselschwader gemäß dem Oberbegriff des Patentanspruchs 1.

In der DE-OS 196 03 400 wird eine als Zweikreiselschwader ausgeführte landwirtschaftliche Arbeitsmaschine offenbart, deren in Fahrtrichtung gestaffelt angeordneten Arbeitsorgane hydraulisch um in Fahrtrichtung verlaufende Achsen zwischen einer unteren Arbeits- und einer oberen Transportstellung verschwenkbar an einem Maschinenrahmen angeordnet sind. Zur Vermeidung der nochmaligen Aufnahme des Erntegutes durch die Arbeitsorgane beim Überfahren des Randschwades wird eine Hubzylindersteuerung offenbart, die durch einmaliges Auslösen des Anhebvorganges des in Fahrtrichtung vorderen Arbeitsorgans ein zeitversetztes Anheben des nachgeordneten Arbeitsorgans auslöst. Umgekehrt kann nach überfahrenem Randschwad durch nochmaliges Betätigen der im Trägerfahrzeug vorgesehenen Steuereinheit das Absenken des in Fahrtrichtung vorderen Arbeitsorgans ausgelöst werden, worauf sich zeitversetzt das nachgeordnete Arbeitsorgan wiederum selbsttätig in die Arbeitsposition absenkt. Auf konstruktiv einfache Weise wird so ein zeitversetztes Verschwenken zueinander gestaffelt angeordneter Arbeitsorgane erreicht. Der Nachteil einer derartigen Steuerung ist die ausschließlich zeitabhängige Steuerung des Verschwenkens der Arbeitsorgane. Fährt das Trägerfahrzeug mit höherer Geschwindigkeit als durch die Zeitkonstante des Stellgliedes berücksichtigt über den Randschwad vom Feld, kann es dazu kommen, daß das nachgeordnete Arbeitsorgan bei Erreichen des Randschwades noch nicht angehoben wird. Umgekehrt kann bei niedriger als durch die Zeitkonstante berücksichtigter Fahrgeschwindigkeit des Trägerfahrzeugs beim Überfahren des Randschwades in Richtung noch nicht geschwadeten Gutes das Absenken des nachgeordneten Arbeitsorgans bereits vor dem Randschwad erfolgen. Beide Situationen führen zu einer Verschlechterung der Arbeitsqualität einer derartigen landwirtschaftlichen Arbeitsmaschine, da jeweils ein Teil des Randschwades nochmals durch die Arbeitsorgane des Zweikreiselschwaders aufgenommen wird.

Die EP 0 494 516 A1 beschreibt ein Regelsytem zur Koordinierung der Arbeit von ersten und zweiten in Bezug auf die vorgesehene Fahrtrichtung eines Schleppers bzw. Trägerfahrzeugs in Abständen voneinander angeordneten Geräten, wobei eine Vorrichtung zum Ausgleichen des Geräteabstandes vorgehen ist, um die Koordinierung der Gerätearbeit in Abhängigkeit von den Abständen zwischen den Geräten relativ zur vorgesehenen Fahrtrichtung des Schleppers anzupassen. Dieses Regelsystem bezieht sich auf wenigstens zwei zueinader beabstandete Geräte und es ist zudem technologische sehr aufwändig gestaltet.

Der Erfindung liegt deshalb die Aufgabe zugrunde, eine Steuerung für einen Kreiselschwader gemäß dem Oberbegriff des Anspruchs 1 so zu gestalten, daß der am Trägerfahrzeug ausgelöste Verschwenkvorgang des oder der in Fahrtrichtung vorderen Arbeitsorgane in Abhängigkeit von dem zurückgelegten Weg auf der Basis von Zählimpulsen in Verbindung mit einem Bussystems des Kreiselschwaders ein selbsttätiges Verschwenken des oder der nachgeordneten Arbeitsorgane auslöst.

Erfindungsgemäß wird die Aufgabe durch eine Steuerung für einen Kreiselschwader mit den kennzeichnenden Merkmalen des Anspruchs 1 gelöst.

Durch die Anordnung einer Meß- und Steuereinheit zwischen dem Kreiselschwader und dem Trägerfahrzeug, kann neben dem vom Trägerfahrzeug generierten Eingangssignal zur Verschwenkung des oder der in Fahrtrichtung vorderen Arbeitsorgane selbsttätig durch Vergleich eines generierten Stellsignals mit einem voreinstellbaren Schwellwert ein zeitversetztes weiteres Ausgangssignal zum Verschwenken des oder der nachgeordneten Arbeitsorgane erzeugt werden. Auf diese Weise ist sichergestellt, daß das nachgeordnete Arbeitsorgan stets vor dem Randschwad angehoben und erst nach überfahrenem Randschwad wieder abgesenkt wird.

Auf konstruktiv einfache Weise kann das Stellsignal durch eine Sensoranordnung an wenigstens einem Laufrad des Kreiselschwaders generiert werden.

In vorteilhafter Weiterbildung der Erfindung kann die Sensoranordnung einen induktiven Sensor umfassen, der während der Drehung des entsprechenden Laufrades Zählimpulse erzeugt, die in der Meß- und Steuereinrichtung zum Stellsignal weiterverarbeitet werden.

In vorteilhafter Weiterbildung der Erfindung ist ein stufenloses Verändern des Schwellwertes der Meß- und Steuereinrichtung vorgesehen, so daß die Meß- und Steuereinrichtung universell ausgeführt sein kann und durch Veränderung des Schwellwertes auf einfache Weise an die geometrischen Bedingungen des jeweiligen Kreiselschwaders anpaßbar ist.

Damit äußeren Einflüssen unterliegende Störungen bei der Generierung des Stellsignals die Funktionsfähigkeit der Meß- und Steuereinrichtung nicht beeinträchtigen, kann die Meß- und Steuereinrichtung in vorteilhafter Weise durch ein Zeitglied ergänzt sein, welches nach Ablauf eines einstellbaren Zeitintervalls das Stellsignal unabhängig von den vorgesehenen Sensorsystemen erzeugt.

Vorteilhafte Ausgestaltungen sind Gegenstand weiterer Unteransprüche und werden nachfolgend anhand in Zeichnungen dargestellter Ausführungsbeispiele näher erläutert.

Es zeigen
- Figur 1: eine landwirtschaftliche Arbeitsmaschine ausgeführt als Kreiselschwader mit erfindungsgemäßer Steuerung in der Draufsicht
- Figur 2: eine Detailansicht der erfindungsgemäßen Steuerung in der Draufsicht

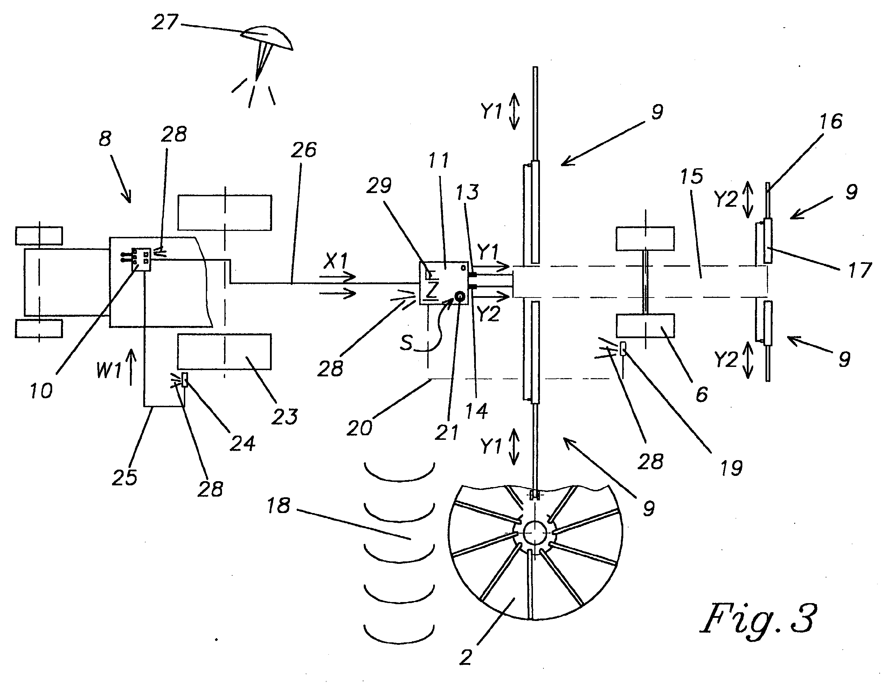

- Figur 3: eine Detailansicht einer weiteren erfindungsgemäßen Steuerung in der Draufsicht.

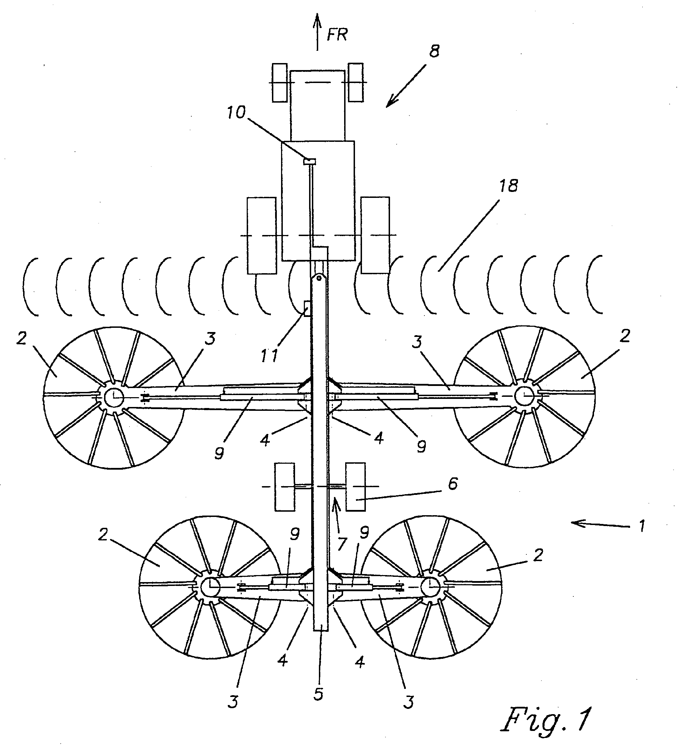

Figur 1 zeigt eine als Vierkreiselschwader 1 ausgeführte landwirtschaftliche Arbeitsmaschine, deren als Rechkreisel 2 ausgeführten und in Fahrtrichtung FR versetzt zueinander angeordneten vorderen und hinteren Arbeitsorgane an Seitenrahmen 3 adaptiert sind, die um in Fahrtrichtung FR verlaufende Achsen 4 schwenkbar an einem Hauptrahmen 5 angeordnet sind, der über ein Laufräder 6 tragendes Fahrwerk 7 am Boden abgestütz wird und der an seinem in Fahrtrichtung FR vorn liegenden Ende an einem Trägerfahrzeug 8 adaptiert ist. Die Verschwenkung der Rechkreisel 1 um die Achsen 4 erfolgt in an sich bekannter und deshalb nicht näher erläuterter Weise mittels hydraulischer Hubzylinder 9, die einenends schwenkbar am Hauptrahmen 5 und anderenends ebenfalls schwenkbar an dem jeweiligen Seitenrahmen 3 befestigt sind. Das Trägerfahrzeug 8 verfügt über wenigstens ein Steuergerät 10 zur elektrischen und hydraulischen Ansteuerung der als Vierkreiselschwader 1 ausgeführten und am Trägerfahrzeug 8 adaptierten landwirtschaftlichen Arbeitsmaschine. Der Vierkreiselschwader 1 nimmt die erfindungsgemäße Meß-und Steuereinrichtung 11 vorteilhafterweise am trägerfahrzeugseitigen Ende des Hauptrahmens 5 lösbar auf.

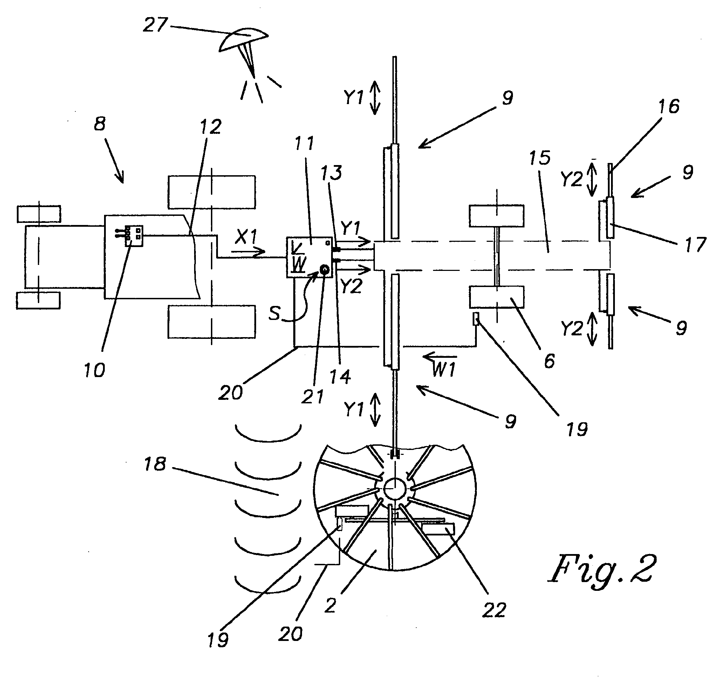

In Figur 2 ist die erfindungsgemäße Steuerung einer als Vierkreiselschwader 1 ausgeführten landwirtschaftlichen Arbeitsmaschine anhand der erfindungswesentlichen Baugruppen detailliert beschrieben. Das Steuergerät 10 des Trägerfahrzeugs 8 ist über ein elektrisches und/oder hydraulisches Leitungssystem 12 mit der Meß- und Steuereinrichtung 11 des Vierkreiselschwaders 1 zur Übertragung des im Steuergerät 10 generierten Eingangssignals X1 verbunden. Die Meß- und Steuereinrichtung 11 verfügt über wenigstens zwei Ausgänge 13, 14 die mit dem an sich bekannten und deshalb nicht näher dargestellten, die Hubzylinder 9 der Rechkreisel 2 einschließenden Hydraulikkreislauf 15 verbunden sind. Die Hubzylinder 9 sind im einfachsten Fall als einfachwirkende Zylinder ausgeführt, so daß deren Druckbeaufschlagung zu einem Einfahren der Kolbenstange 16 in den Zylinder 17 und damit zu einem Anheben der Rechkreisel 1 führt. Umgekehrt wird bei drucklosem Hubzylinder 9 die Kolbenstange 16 durch die Schwerkraft des jeweiligen Rechkreisels 2 aus aus dem Kolben 17 herausgezogen und der Rechkreisel 2 schwenkt zurück in die Arbeitsposition. Befinden sich die in Fahrtrichtung FR vorderen Rechkreisel in der Arbeitsstellung unmittelbar vor dem querliegenden Randschwad 18, löst die Bedienperson des Trägerfahrzeugs 8 am Steuergerät 10 Eingangssignal X1 aus, woraufhin die Meß- und Steuereinrichtung 11 Ausgangssignal Y1 zum Anheben der in Fahrtrichtung FR vorderen Rechkreisel 1 generiert. In einem ersten Ausführungsbeispiel ist wenigstens ein Laufrad 6 des Vierkreiselschwaders 1 mit einem Sensor 19 ausgerüstet, der im einfachsten Fall auf induktiver Basis als Ausgangssignal W1 Zählimpulse liefert, die in der Meß- und Steuereinrichtung 11 in Abhängigkeit von der Radgeometrie zu Stellsignal W verrechnet werden. Löst Ausgangssignal Y1 ein Anheben der vorderen Rechkreisel 2 aus, nimmt die Meß- und Steuereinrichtung 11 die Zeit und die Zählimpulse W1 des Sensors 19 über Leitung 20 auf und generiert einen weg-und/oder geschwindigkeitsabhängigen Stellwert W, der mit einem am Meß- und Steuergerät 11 über einen Schwellwertschalter 21 voreinstellbaren Schwellwert S verglichen wird. Der Schwellwert S basiert auf dem in Fahrtrichtung FR gesehenen Abstand der vorderen und hinteren Rechkreisel 2 zueinander, der für den offenbarten Vierkreiselschwader 1 konstant ist und für den Einsatz der Meß- und Steuereinrichtung 11 an einer anderen gattungsgemäßen landwirtschaftlichen Arbeitsmaschine gemäß den dortigen geometrischen Bedingungen am Schwellwertschalter 21 neu eingestellt werden kann. Die Meß- und Steuereinrichtung 11 ist so programmiert, daß das durch sie generierte Stellsignal W den zurückgelegten Weg des Vierkreiselschwaders 1 seit Beginn des Anhebens der in Fahrtrichtung FR vorderen Rechkreisel 2 wiedergibt. Erreicht das Stellsignal W die Größe des Abstandes zwischen den vorderen und hinteren Rechkreiseln 2, nämlich den Schwellwert S, so generiert die Meß- und Steuereinheit 11 ein Ausgangssignal Y2, welches dann zum selbsttätigen Anheben der hinteren Rechkreisel 2 führt. Auf diese Weise wird sichergestellt, daß die in Fahrtrichtung FR hinteren Rechkreisel 2 stets vor dem querliegenden Randschwad 18 selbsttätig angehoben werden, so daß ein nochmaliges Aufnehmen des Randschwades 18 durch die hinteren Rechkreisel 2 vermieden wird. Umgekehrt führt bei angehobenen Rechkreiseln 2 das Generieren eines Eingangssignals X1 am Steuergerät 10 des Trägerfahrzeugs 8 zur Erzeugung von Ausgangssignal Y1 an der Meß-und Steuereinrichtung 11, wodurch die in Fahrtrichtung vorderen Rechkreisel 2 in die Arbeitsstellung zurückschwenken. Gleichzeitig liefert der Sensor 19 Zählimpulse W1, die in der Meß- und Steuereinrichtung 11 wieder zu Stellsignal W weiterverarbeitet werden. Übersteigt das generierte Stellsignal W den voreingestellten Schwellwert S erzeugt die Meß- und Steuereinrichtung 11 Ausgangssignal Y2, welches nun zum Absenken der hinteren Rechkreisel 2 führt, so daß auch beim Absenken der Rechkreisel 2 sichergestellt ist, daß die hinteren Rechkreisel 2 ebenfalls erst nach überquertem Randschwad 18 wieder in ihre Arbeitsstellung schwenken.

Verfügen die Arbeitsorgane 2 über wenigstens ein eigenes Laufrad 22, so kann der Sensor 19 wie in Figur 2 gestrichelt angedeutet auch an diesem Laufrad angeordnet sein, um die beschriebene Funktion zu erfüllen.

In einer weiteren vorteilhaften Ausführungsform kann auch wenigstens ein Laufrad 23 des Trägerfahrzeugs 8 mit einem einfachstenfalls induktiven Sensor 24 ausgerüstet sein, dessen Zählimpulse W1 über Leitungssystem 25 an das Steuergerät 10 des Trägerfahrzeugs 8 übertragen wird und von dort mittels landwirtschaftlichem Bussystem 26 in Stellsignal W umgewandelt und zusammen mit Eingangssignal X1 an das Meß- Steuergerät 11 übergeben wird. In diesem Fall kann die Anordnung des Senors 19 und des Leitungssystems 20 an der landwirtschaftlichen Arbeitsmaschine 1 entfallen.

Zur Reduzierung der zur Datenübertragung notwendigen Leitungssysteme 20, 25, 26 und zur Schaffung einer größeren Flexibilität zwischen den am Trägerfahrzeug 8 und der landwirtschaftlichen Arbeitsmaschine 1 angeordneten Funktionsbaugruppen 10, 11, 19, 24 der erfindungsgemäßen Steuerung kann die Datenübertragung zwischen diesen Funktionsbaugruppen 10, 11, 19, 24 auch drahtlos mittels Funkwellen 28 erfolgen.

Zur Reduzierung des Einflusses verschiedener Störgrößen auf die Arbeitsweise der Sensoren 19, 24, des Satellitensystems 27 oder bei der drahtlosen Datenübertragung mittels Funkwellen 28 kann die Meß- und Steuereinrichtung 11 zusätzlich über ein Zeitglied 29 verfügen, dessen Zeitkonstante Z so eingestellt werden kann, daß das Anheben und Absenken der Rechkreisel 2 auch bei Ausfall der Stellsignal W erzeugenden Systeme 19, 24, 27, 28 noch so ausreichend zeitig erfolgt, daß eine Aufnahme des Randschwades 18 durch die Arbeitsorgane 2 weitesgehend vermieden wird.

Die in den Ausführungsbeispielen beschriebenen induktiven Sensoren 19, 24 können auch durch an sich bekannte, nicht näher erläuterte kapazitive oder nach dem Doppler-Effekt arbeitende Sensoren ersetzt sein.

### Bezugszeichenliste

- 1: Vierkreiselschwader
- 2: Rechkreisel
- 3: Seitenrahmen
- 4: Schwenkachse
- 5: Hauptrahmen
- 6: Laufrad
- 7: Fahrwerk
- 8: Trägerfahrzeug
- 9: Hubzylinder
- 10: Steuergerät
- 11: Meß- und Steuereinrichtung
- 12: Leitungssystem
- 13: Geräteausgang
- 14: Geräteausgang
- 15: Hydraulikkreislauf
- 16: Kolbenstange
- 17: Kolben
- 18: Randschwad
- 19: Sensor
- 20: Leitung
- 21: Schwellwertschalter
- 22: Laufrad
- 23: Laufrad
- 24: Sensor
- 25: Leitungssystem
- 26: landwirtschaftliches Bussystem
- 27: Satellitensystem
- 28: Funkwellen
- 29: Zeitglied

- FR: Fahrtrichtung
- S: Schwellwert
- W: Stellsignal
- W1: Zählimpuls
- X1: Eingangssignal
- Y1: Ausgangssignal
- Y2: Ausgangssignal
- Z: Zeitkonstante

## Patentansprüche

1. Kreiselschwader mit einer Meß- und Steuereinrichtung (11) mit in Fahrtrichtung gestaffelt zueinander angeordneten und von einer Arbeits- in eine Nichtarbeitsstellung und umgekehrt verschwenkbaren Arbeitsorganen (2), der an einem Trägerfahrzeug (8) adaptier bar ist, und welcher vorgesehen ist für ein Trägerfahrzeug (8), welches über wenigstens ein Steuergerät (10) zur Auslösung des Verschwenkvorganges der Arbeitsorgane (2) des Kreiselschwaders zwischen einer unteren Arbeits- und einer oberen Transportstellung verfügt,
**dadurch gekennzeichnet,**
**daß** eine Wegabhängige, auf Zählimpulsen basierende, Meß- und Steuereinrichtung (11) zwischen den Arbeitsorganen (2) und dem Trägerfahrzeug (8) vorgesehen ist, welche bei anliegendem Eingangssignal X1 ein Ausgangssignal Y1 zur Lageänderung des oder der in Fahrtrichtung (FR) vorderen Arbeitsorgane (2) auslöst, wobei ein Stellsignal W generiert und in der Meß- und Steuereinrichtung (11) mit einem Schwellwert S verglichen wird und bei Überschreitung des Schwellwertes S durch die Meß- und Steuereinrichtung (11) selbsttätig ein Ausgangssignal Y2 zur Lageänderung des oder der in Fahrtrichtung (FR) nachgeordneten Arbeitsorgane (2) erzeugt wird, zum Überfahren von Randschwaden unter Berücksichtigung der gestaffelten Anordnung der Arbeitsorgane.

2. Kreiselschwader nach einem oder mehreren der vorgenannten Ansprüche,
**dadurch gekennzeichnet,**
**daß** das Eingangssignal X1 durch Fremdauslösung des am Trägerfahrzeug (8) adaptierten Steuergeräts (10) generiert und hydraulisch und/oder elektrisch an die Meß- und Steuereinrichtung (11) übertragen wird.

3. Kreiselschwader nach einem oder mehreren der vorgenannten Ansprüche,
**dadurch gekennzeichnet,**
**daß** er über wenigstens ein Laufrad (6, 22) verfügt und das Stellsignal W durch eine Sensoranordnung (19, 20) an wenigstens einem Laufrad (6, 22) des Kreiselschwaders generiert und an die Meß- und Steuereinrichtung (11) übertragen wird.

4. Kreiselschwader nach Ansprüche 4;
**dadurch gekennzeichnet,**
**daß** die Sensoranordnung (19, 20, 23, 24) durch einen induktiven Sensor (19, 23) gebildet wird, dessen Ausgangssignal W1 in der Meß- und Steuereinrichtung (11) oder dem Steuergerät (10) zu Stellsignal W weiterverarbeitet wird.

5. Kreiselschwader nach einem der Ansprüche 3-4;
**dadurch gekennzeichnet,**
**daß** die Sensoranordnung (19, 20, 23, 24) durch einen kapazitiven oder nach dem Doppler-Effekt arbeitenden Sensor (19, 23) gebildet wird, dessen Ausgangssignal W1 in der Meß- und Steuereinrichtung (11) oder dem Steuergerät (10) zu Stellsignal W weiterverarbeitet wird.

6. Kreiselschwader nach einem oder mehreren der vorgenannten Ansprüche,
**dadurch gekennzeichnet,**
**daß** die Wegkoordinaten zur Generierung des Stellsignals W durch ein Satellitensystem (26) gewonnen werden.

7. Kreiselschwader nach einem oder mehreren der vorgenannten Ansprüche,
**dadurch gekennzeichnet,**
**daß** die Übertragung der verschiedenen Signale X1, Y1, Y2, W, W1 leitungslos über Funkwellen (27) erfolgt.

8. Kreiselschwader nach einem oder mehreren der vorgenannten Ansprüche,
**dadurch gekennzeichnet,**
**daß** das Ausgangssignal Y1 entweder das Anheben oder das Absenken des in Fahrtrichtung (FR) vorderen Arbeitsorgans (2) auslöst.

9. Kreiselschwader nach einem oder mehreren der vorgenannten Ansprüche,
**dadurch gekennzeichnet,**
**daß** der Schwellwert S über einen Schwellwertschalter (21) stufenlos veränderbar ist.

10. Kreiselschwader nach einem oder mehreren der vorgenannten Ansprüche,
**dadurch gekennzeichnet,**
**daß** zur wegabhängigen Generierung des Stellsignals W der Meß- und Steuereinrichtung (11) ein Zeitglied (28) mit Zeitkonstante Z zugeordnet ist, welches bei ausgefallenem Signalerzeugungssystem (19, 20, 23-27) das Stellsignal W nach Ablauf einer Zeitspanne t selbsttätig erzeugt.

11. Kreiselschwader nach Anspruch 14,
**dadurch gekennzeichnet,**
**daß** die Zeitkonstante Z einstellbar ist.

## Claims

1. A rotary swather comprising a measuring and control device (11) with working members (2) which are arranged in mutually staggered relationship in the direction of travel and which are pivotable from a working position into a non-working position and vice-versa, which can be adapted to a carrier vehicle (8), and which is intended for a carrier vehicle (8) having at least one control device (10) for triggering the pivotal movement of the working members (2) of the rotary swather between a lower working position and an upper transport position,
**characterised in that**
provided between the working members (2) and the carrier vehicle (8) is a travel-dependent measuring and control device (11) which is based on counting pulses and which when an input signal X1 is applied triggers an output signal Y 1 for a change in position of the working member or members (2) at the front in the direction of travel (FR), wherein a setting signal W is generated and compared to a threshold value S in the measuring and control device (11) and an output signal Y2 for changing the position of the working member or members (2) arranged trailing in the direction of travel (FR) is produced automatically when the threshold value S is exceeded by the measuring and control device (11), for travelling over edge swathes having regard to the staggered arrangement of the working members.

2. A rotary swather according to claim 1 **characterised in that** the input signal X1 is generated by external triggering of the control device (10) adapted to the carrier vehicle (8) and is hydraulically and/or electrically transmitted to the measuring and control device (11).

3. A rotary swather according to one or more of the preceding claims **characterised in that** it has at least one runner wheel (6, 22) and the setting signal (W) is generated by a sensor arrangement (19, 20) at at least one runner wheel (6, 22) of the rotary swather and is transmitted to the measuring and control device (11).

4. A rotary swather according to claim 3 **characterised in that** the sensor arrangement (19, 20, 23, 24) is formed by an inductive sensor (19, 23) whose output signal W1 is subjected to further processing in the measuring and control device (11) or the control device (10) to give the setting signal W.

5. A rotary swather according to one of claims 3 and 4 **characterised in that** the sensor arrangement (19, 20, 23, 24) is formed by a capacitive or Doppler effect-based sensor (19, 23) whose output signal W1 is subjected to further processing in the measuring and control device (11) or the control device (10) to give the setting signal W.

6. A rotary swather according to one or more of the preceding claims **characterised in that** the travel co-ordinates for generating the setting signal W are obtained by a satellite system (26).

7. A rotary swather according to one or more of the preceding claims **characterised in that** transmission of the various signals X1, Y1, Y2, W, W1 is effected wirelessly by way of radio waves (27).

8. A rotary swather according to one or more of the preceding claims **characterised in that** the output signal Y1 triggers either raising or lowering of the working member (2) which is at the front in the direction of travel (FR).

9. A rotary swather according to one or more of the preceding claims **characterised in that** the threshold value S is steplessly variable by way of a threshold value switch (21).

10. A rotary swather according to one or more of the preceding claims **characterised in that** associated with the travel-dependent generation of the setting signal W of the measuring and control device (11) is a timing member (28) with a time constant Z, which when the signal generating system (19, 20, 23-27) has failed automatically generates the setting signal W after the expiry of a period of time t.

11. A rotary swather according to claim 14 **characterised in that** the time constant Z is adjustable.

## Revendications

1. Andaineuse rotative, comprenant un dispositif de mesure et de commande (11), avec des organes de travail (2) disposés de façon décalée les uns par rapport aux autres, dans le sens d'avancement, et pouvant être pivotés d'une position de travail dans une position de non travail et inversement, andaineuse qui peut être adaptée sur un véhicule porteur (8) et qui est prévue pour un véhicule porteur (8) disposant d'au moins un appareil de commande (10) pour déclencher l'opération de pivotement des organes de travail (2) de l'andaineuse rotative, entre une position de travail basse et une position de transport haute,
**caractérisé par le fait**
**qu'**un dispositif de mesure et de commande (11), dépendant de la distance et basé sur des impulsions de comptage, est prévu entre les organes de travail (2) et le véhicule porteur (8) et, lors de l'application d'un signal d'entrée X1, déclenche un signal de sortie Y1 en vue du changement de position de l'organe de travail ou des organes de travail (2) situés à l'avant dans le sens d'avancement (FR), sachant qu'un signal de réglage W est généré et comparé avec une valeur seuil S dans le dispositif de mesure et de commande (11), et, en cas de dépassement de la valeur seuil S, le dispositif de mesure et de commande (11) produit automatiquement un signal de sortie Y2 pour le changement de position de l'organe de travail ou des organes de travail (2) situés en aval dans le sens d'avancement (FR), en vue du passage sur des andains de bord, en tenant compte de la disposition décalée des organes de travail.

2. Andaineuse rotative selon une ou plusieurs des revendications précédentes, **caractérisée par le fait que** le signal d'entrée X1 est généré par déclenchement extérieur de l'appareil de commande (10) adapté sur le véhicule porteur (8) et est transmis par voie hydraulique et/ou électrique au dispositif de mesure et de commande (11).

3. Andaineuse rotative selon une ou plusieurs des revendications précédentes, **caractérisée par le fait qu'**elle dispose d'au moins une roue porteuse (6, 22) et le signal de réglage W est généré par un système de capteur (19, 20) sur au moins une roue porteuse (6, 22) de l'andaineuse rotative et est transmis au dispositif de mesure et de commande (11).

4. Andaineuse rotative selon la revendication 4, **caractérisée par le fait que** le système de capteur (19, 20, 23, 24) est constitué d'un capteur inductif (19, 23), dont le signal de sortie W1 est traité dans le dispositif de mesure et de commande (11) ou l'appareil de commande (10) pour obtenir le signal de réglage W.

5. Andaineuse rotative selon une des revendications 3 à 4, **caractérisée par le fait que** le système de capteur (19, 20, 23, 24) est constitué d'un capteur capacitif ou d'un capteur fonctionnant selon l'effet Doppler (19, 23), dont le signal de sortie W1 est traité dans le dispositif de mesure et de commande (11) ou l'appareil de commande (10) pour obtenir le signal de réglage W.

6. Andaineuse rotative selon une ou plusieurs des revendications précédentes, **caractérisée par le fait que** les coordonnées de distance pour générer le signal de réglage W sont obtenues à l'aide d'un système de satellite (26).

7. Andaineuse rotative selon une ou plusieurs des revendications précédentes, **caractérisée par le fait que** la transmission des différents signaux X1, Y1, Y2, W, W1 se fait sans fil, via des ondes radioélectriques (27).

8. Andaineuse rotative selon une ou plusieurs des revendications précédentes, **caractérisée par le fait que** le signal de sortie Y1 déclenche soit le soulèvement soit l'abaissement de l'organe de travail (2) situé à l'avant dans le sens d'avancement (FR).

9. Andaineuse rotative selon une ou plusieurs des revendications précédentes, **caractérisée par le fait que** la valeur seuil S peut être modifiée en continu par l'intermédiaire d'un commutateur de valeur seuil (21).

10. Andaineuse rotative selon une ou plusieurs des revendications précédentes, **caractérisée par le fait que** pour générer le signal de réglage W en fonction de la distance, on associe au dispositif de mesure et de commande (11) un relais temporisateur (28) avec la constante de temps Z, qui, en cas de panne du système de production de signal (19, 20, 23 à 27), génère automatiquement le signal de réglage W, après écoulement d'un laps de temps t.

11. Andaineuse rotative selon la revendication 14, **caractérisée par le fait que** la constante de temps Z est réglable.
